# EUROPÄISCHE PATENTSCHRIFT

(11) **EP 2 470 339 B1**
(45) Veröffentlichungstag und Bekanntmachung des Hinweises auf die Patenterteilung: **25.10.2017**
(21) Anmeldenummer: 10747393.6
(22) Anmeldetag: 23.08.2010
(51) Int. Cl.: B29B 9/14

(54) **LANGFASERVERSTÄRKTES POLYMERMATERIAL UND VERFAHREN UND ANLAGE ZU DESSEN HERSTELLUNG**
POLYMER MATERIAL REINFORCED BY LONG FIBERS AND METHOD AND SYSTEM FOR THE PRODUCTION OF SAID POLYMER MATERIAL
MATÉRIAU POLYMÈRE RENFORCÉ PAR DES FIBRES LONGUES ET PROCÉDÉ ET SYSTÈME DE FABRICATION ASSOCIÉ

(30) Priorität: 24.08.2009 CH 13062009
(43) Veröffentlichungstag der Anmeldung: 04.07.2012
(73) Patentinhaber: Stirnemann, David, 5400 Baden (CH)
(72) Erfinder: Stirnemann, David, 5400 Baden (CH)
(74) Vertreter: Frei Patent Attorneys
(86) Internationale Anmeldenummer: PCT/CH2010/000204
(87) Internationale Veröffentlichungsnummer: WO 2011/022852

(56) Entgegenhaltungen:
- DE-A1- 19 711 247
- DE-U1- 29 911 623
- GB-A- 1 159 579

## Beschreibung

Die Erfindung betrifft ein langfaserverstärktes Polymermaterial, insbesondere zum Verarbeiten im Spritzgiess- und Extrusionsverfahren, welches Granulate mit integrierter Langfaserverstärkung aufweist gemäss Oberbegriff von Anspruch 1 sowie ein Verfahren und eine Anlage zur Herstellung dieses langfaserverstärkten Polymermaterials. Zur Anwendung im Spritzgiess- und Extrusionsverfahren bekannte Materialien sind kurzfaserverstärktes Polymermaterial in Form von Granulaten mit 0.1 bis 5 mm Faserlänge und langfaserverstärktes Polymermaterial in Form von Stäbchengranulaten mit Faserlängen von 5 mm bis 50 mm, wobei über 25 mm lange Stäbchengranulate nur noch mit modifizierten grossen Spezial-Plastifizieraggregaten verarbeitet werden können. Üblicherweise sind Längen von 10 mm, 12 mm oder 25 mm erhältlich. Als Verfahren zur Herstellung von Bauteilen mit sehr langen Fasern sind nicht-kontinuierliche Wickelverfahren, z.B. zur Herstellung von Behältern und Rohren mit Endlosfaser-Rovings bekannt. Eine spezielle Spritzguss-Anlage ist z.B. bekannt aus der WO 00/37233, bei der ein Endlosfaserstrang in den Compounder eingemischt wird und direkt diskontinuierlich eingespritzt wird (In Line Compounding). Dieses Verfahren setzt grundsätzlich jedoch spezielle, aufwändige Spritzgiessanlagen voraus.

Mit den bekannten Polymermaterialien können nur sehr beschränkt Langfasern in den resultierenden Spritzguss-Bauteilen erreicht werden. Bei der Verarbeitung von bekannten Stäbchengranulaten mit Schnecken-Plastifizieraggregaten werden die relativ langen Fasern hohen Scherbeanspruchungen ausgesetzt, was dazu führt, dass die meisten der langen Fasern gebrochen und massiv verkürzt werden. Überdies ist auch die maximale Faserlänge durch die Länge des Stäbchengranulats beschränkt. Diese Problem der Faserverkürzung vor allem beim Einzug und im Feststoff förderbereich von Schnecken-Maschinen konnte bis heute nicht gelöst werden. Das Problem verstärkt sich, je kleiner die eingesetzten Schneckendurchmesser sind. Insbesondere ist heute die Verarbeitung von LFT-Stäbchengranulaten mit Schneckendurchmessern unter 60 mm ohne Veränderungen an der Maschine nicht möglich.
Die DE 299 11 623 beschreibt ein Langfasergranulat aus thermoplastischen Stapelfasern und Verstärkungsstapelfasern, wobei die Fasern spiralförmig im Granulatkorn angeordnet sind und eine Kern-Mantel-Struktur vorliegt. Und die DE 197 11 247 beschreibt ein Verfahren zur Herstellung von Langfasergranulat aus Hybridbändern, wobei Hybridbänder aus Verstärkungsfasern und Matrixfasern aufgeheizt, durch eine Drehungserteilung kompaktiert und zu einem Strang ausgeformt werden. Dies ermöglicht eine Faserlänge grösser als die Granulatlänge. Auch mit diesen Lehren kann die nachstehende Aufgabe noch nicht gelöst werden.

Es ist nun Aufgabe der vorliegenden Erfindung, die Nachteile und Beschränkungen der bekannten langfaserverstärkten Polymermaterialien zu überwinden und ein kontinuierlich herstellbares langfaserverstärktes Polymermaterial zu schaffen, welches nach der Verarbeitung insbesondere viel längere Fasern im Bauteil und damit viel bessere mechanische Eigenschaften ermöglicht als bisher. Dies soll vor allem auch die Verarbeitung auf bestehenden kleineren Spritzgiess- und Extrusionsanlagen mit kleineren Schneckendurchmessern, auch von weniger als 45 mm ermöglichen.
Diese Aufgabe wird erfindungsgemäss gelöst durch ein langfaserverstärktes Polymermaterial nach Anspruch 1, durch Verfahren nach Anspruch 7 und 8 und durch eine Anlage nach Anspruch 13 zur kontinuierlichen Herstellung des langfaserverstärkten Polymermaterials sowie durch ein Verfahren zur Herstellung eines Bauteils mit Wickelelementen. Mit der Formgebung und dem Aufbau der erfindungsgemässen Wickelelemente werden viel grössere Faserlängen und ein viel grösserer Anteil an langen Fasern in den damit hergestellten Bauteilen erreicht und damit deren mechanische Eigenschaften wie Festigkeit, Steifigkeit und Schlagzähigkeit massiv verbessert. Die Formgebung der Wickelelemente ergibt zum einen grosse Faserlängen im kompakten runden Granulat und ermöglicht zum andern ein schonendes Verarbeiten mit wenig Faserbrüchen und damit grosse Faserlängen im Bauteil.

Die abhängigen Patentansprüche betreffen vorteilhafte Weiterbildungen der Erfindung mit besonderen Vorteilen bezüglich rationeller Herstellung, Verarbeitung und optimaler Eigenschaften des langfaserverstärkten Polymermaterials in Form von Wickelelementen und wesentlich besserer mechanischer Eigenschaften der damit hergestellten Bauteile.

Im Folgenden wird die Erfindung anhand von Ausführungsbeispielen und Figuren weiter erläutert, dabei zeigen:
- Fig. 1: schematisch eine Herstellung von erfindungsgemässen Granulaten mit Langfaserverstärkung in Form von Wickelelementen,
- Fig. 2a, b: ein Beispiel eines Wickelelements mit drei übereinander liegenden Windungen,
- Fig. 3: ein weiteres Beispiel eines Wickelelements mit 1 ½ Windungen,
- Fig. 4: ein Beispiel eines Wickelelements mit nebeneinander liegenden Windungen,
- Fig. 5 - 8: verschiedene Beispiele von Wickelelementen mit übereinander und nebeneinander liegenden Windungen,
- Fig. 9a: eine Herstellung von Wickelelementen mittels Bildung von Wicklungen auf einem Wickelkern,
- Fig. 9b: eine Wickelelement mit teilweise übereinanderliegenden Windungen,
- Fig. 10: eine Anlage zur kontinuierlichen Herstellung von Wickelelementen,
- Fig. 11a, b: eine Herstellung von Wickelelementen mit übereinander liegenden Windungen,
- Fig. 12a, b: eine Herstellung von Wickelelementen mit nebeneinander liegenden Windungen,
- Fig. 12c: eine Herstellung von Wickelelementen in Mischform,
- Fig. 13a, b: eine Herstellung von Wickelelementen mit übereinander und nebeneinander liegenden Windungen,
- Fig. 14a, b: eine Herstellung von Wickelelementen mit zusätzlichem Verschieben des einlaufenden imprägnierten Endlosfaserstrangs,
- Fig. 15a - d: verschiedene Beispiele von Wickelkernen,
- Fig. 16: mehrere kontinuierlich hergestellte Wickelelemente vor dem Trennen,
- Fig. 17: einzelne Wickelelemente als Vierfach-Kringel,
- Fig. 18: Wickelelemente als Granulat-Material,
- Fig. 19: die resultierenden Faserlängen in einem Spritzgussteil im Vergleich:
- Fig. 19a: - hergestellt aus bekannten Stäbchengranulaten,
- Fig. 19b: - hergestellt aus erfindungsgemässen Wickelelementen als Granulat-Material,
- Fig. 20a, b: eine Mehrfach-Wickelanlage mit vielen Wickelstellen,
- Fig. 21: eine Anlage mit einem Wickelkern aus Polymermaterial.

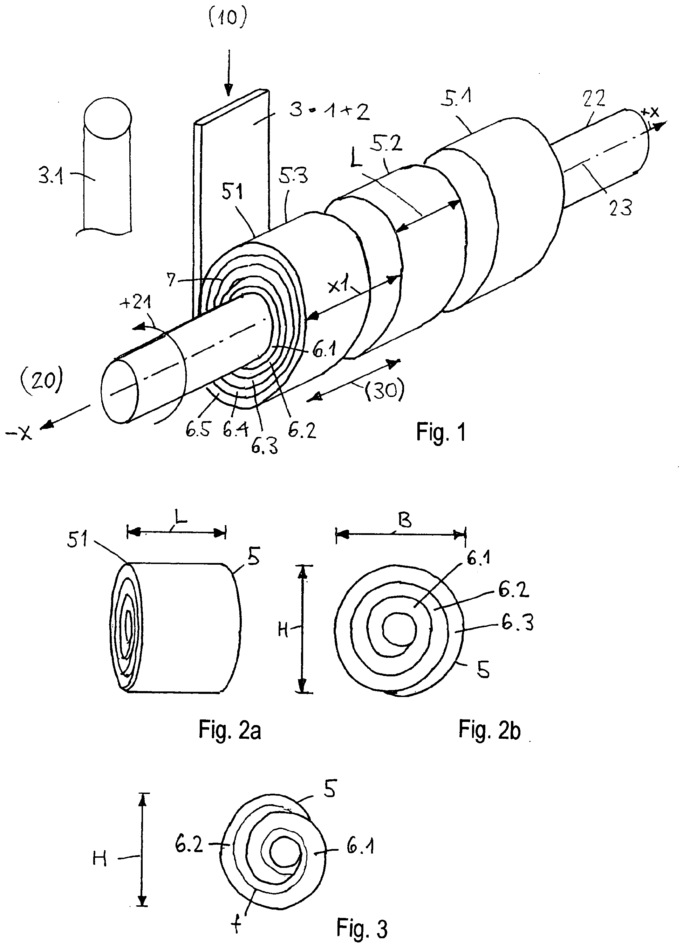

Die Fig. 1 - 8 zeigen verschiedene Beispiele von erfindungsgemässen Wickelelementen 5.

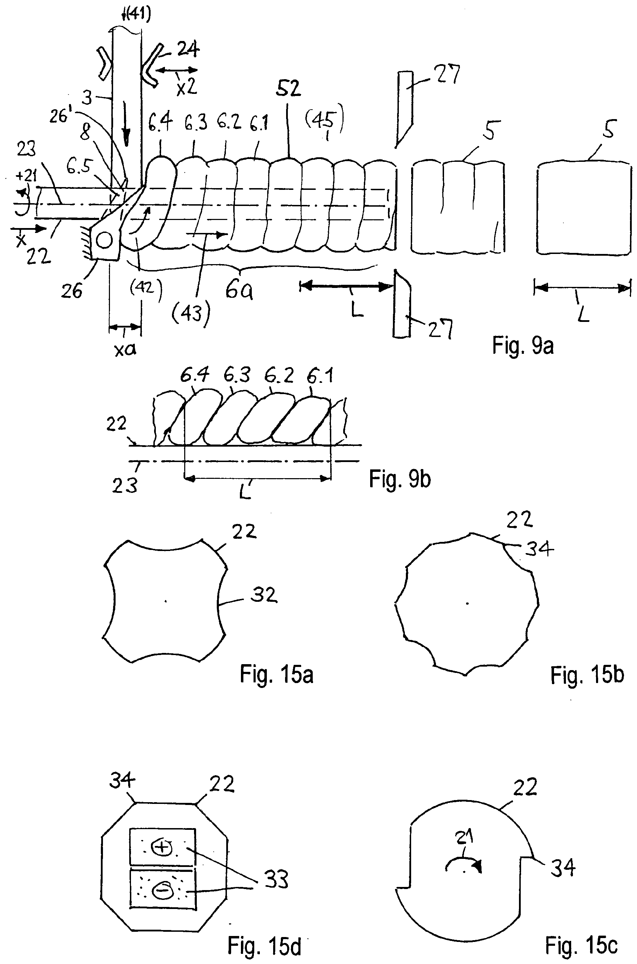

Die Fig. 9 - 14 illustrieren Verfahren und Anlagen zur kontinuierlichen Herstellung von aus Wickelelementen 5 bestehendem Granulatmaterial.

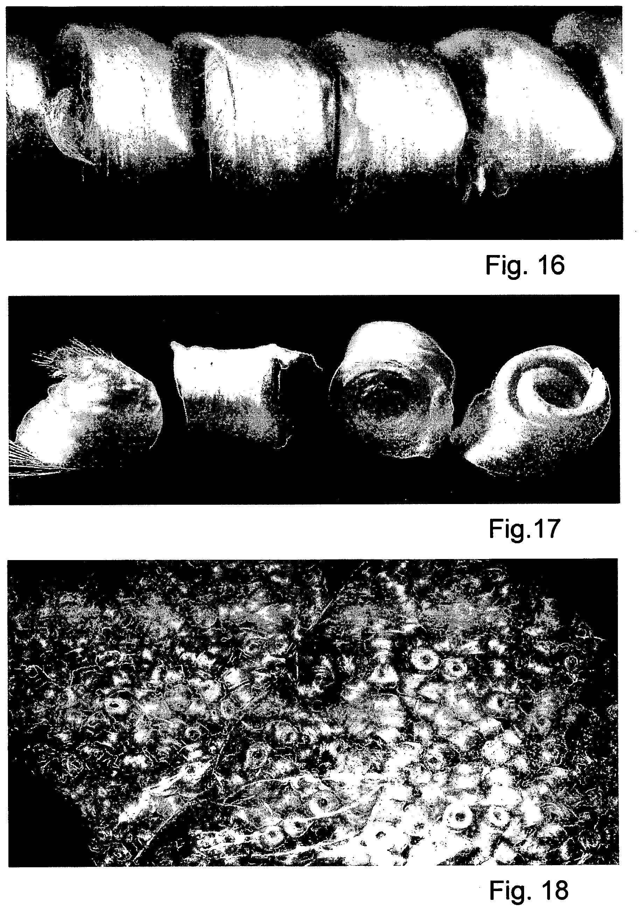

Die Fig. 16 - 19 zeigen Bilder von kontinuierlich hergestellten Wickelelementen und die resultierenden sehr grossen Faserlängen in einem aus Wickelelementen 5 hergestellten Spritzgussteil.

Fig. 1 zeigt schematisch eine kontinuierliche Herstellung von faserverstärktem Polymermaterial, insbesondere zum Verarbeiten im Spritzgiess- und Extrusionsverfahren, bestehend aus Granulaten mit integrierter Langfaserverstärkung, wobei die Granulate aus Polymermaterial als Wickelelemente 5 ausgebildet sind. Die Wickelelemente 5 weisen Endlosfaserstränge 3 aus mit Polymermaterial 2 imprägnierten Endlos-Verstärkungsfasern 1 auf, wobei die Wickelelemente 5 mehr als eine Windung 6 der imprägnierten Endlosfaserstränge 3 enthalten und sich die Windungen 6 in den Wickelelementen 5 mindestens teilweise überlappen 7, indem sie übereinander und / oder nebeneinander liegend angeordnet sind. Die kontinuierliche Herstellung dieser Wickelelemente 5 wird zu den Fig. 9 - 14, 20, 21 detailliert beschrieben.

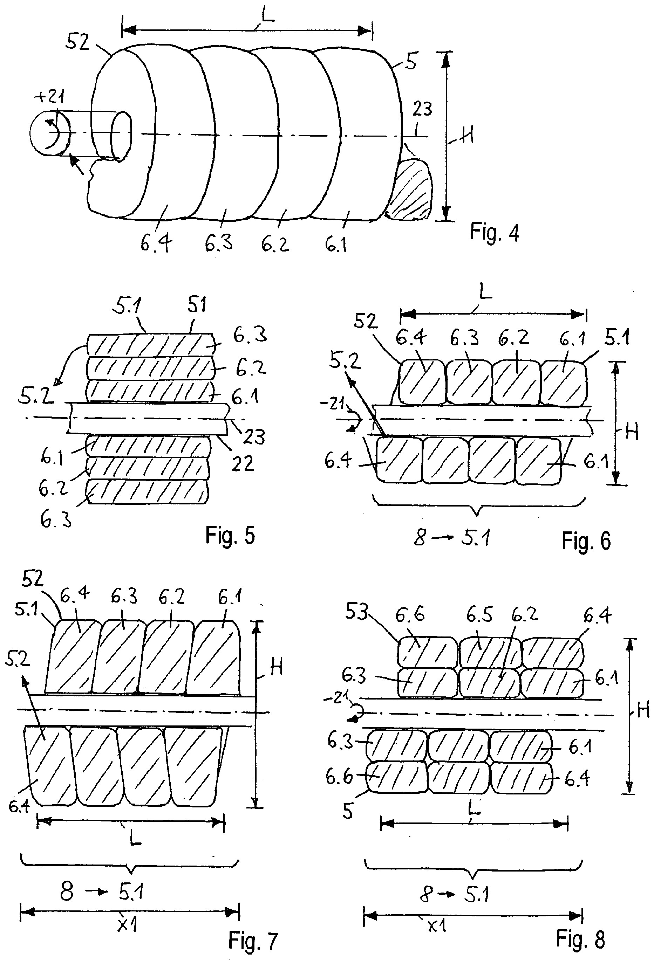

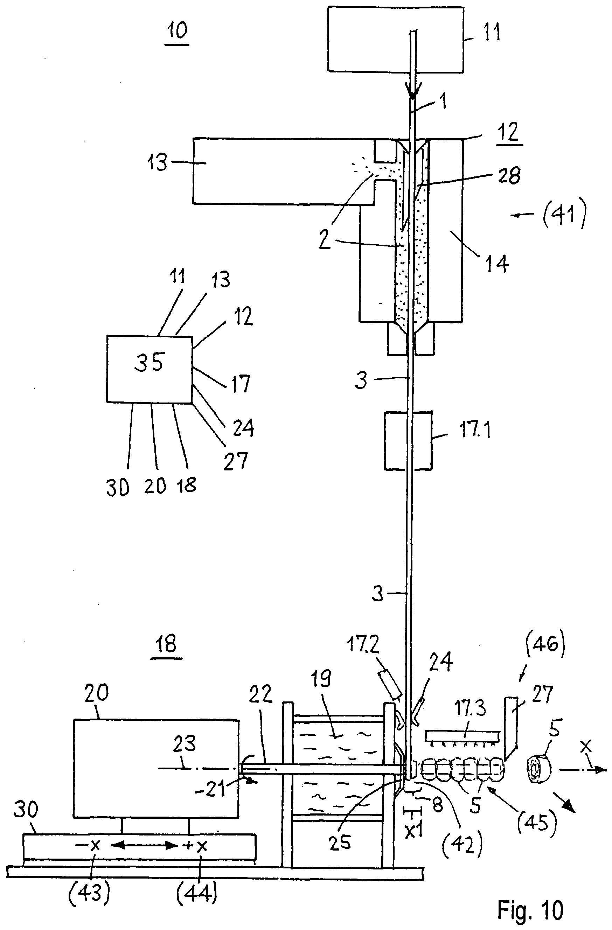

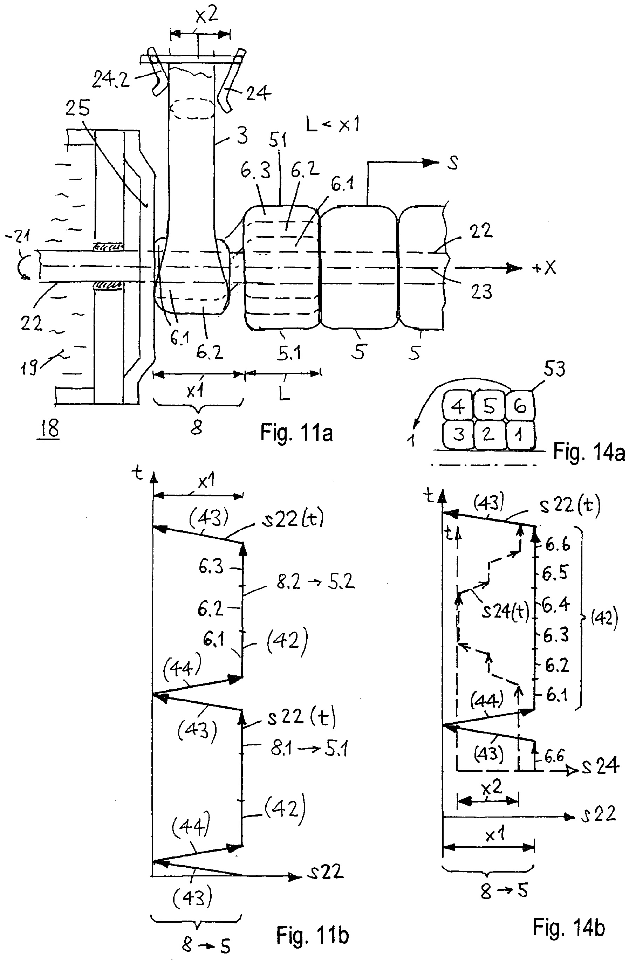

Fig. 1 zeigt einen imprägnierten Endlosfaserstrang 3, welcher auf einen rotierenden Wickelkern 22 aufgewickelt wird zur Bildung von Wickelelementen 5.1, 5.2, 5.3, je mit fünf übereinander liegenden Windungen 6.1 - 6.5, welche sich überlappen (7). Die Wickelelemente 5 werden auf dem Wickelkern 22 schrittweise in +x-Richtung der Wickelachse 23 vorgeschoben und verfestigt (Fig. 10, 11) und anschliessend durch eine Schneidvorrichtung voneinander getrennt. Je nach gewünschter Form der Wickelelemente 5 kann der einlaufende imprägnierte Endlosfaserstrang 3 z.B. eine flache Querschnittsform oder auch eine runde Form 3.2 aufweisen, z.B. für nebeneinander liegenden Windungen nach Fig. 4.

Die erfindungsgemässen Wickelelemente 5 können übereinander liegende Windungen 6 = kringeiförmig 51 (nach Fig. 1 - 3, 5, 10, 11, 16 - 18), nebeneinander liegenden Windungen = spiralförmig 52 (nach Fig. 4, 6, 7, 9a, 12) oder kombiniert übereinander und nebeneinander liegende Windungen = 53 (nach Fig. 8, 9b, 12c, 13, 14) aufweisen. Für viele Anwendungen weisen die Wickelelemente 5 vorzugsweise mindestens teilweise übereinander liegende Windungen auf.

Beim Vorschieben und Aufschmelzen der Wickelelemente 5 in einem Compounder eines Formgebungsprozesses (z.B. Spritzgiessen) erhalten kringelförmige Wickelelemente 51 mit übereinanderliegenden Windungen länger ihre Form, die Windungen werden weniger rasch aufgelöst und weniger rasch durchmischt als bei spiralförmigen Wickelelementen 52 mit nebeneinander liegenden Windungen. Die kringelförmigen Wickelelemente 51 tendieren daher zu besonders wenigen Faserbrüchen mit entsprechend längeren Fasern im Bauteil und mit weniger starker Durchmischung, während die spiralförmigen Wickelelemente 52 rascher aufgelöst zu stärkerer Durchmischung, aber weniger langen Fasern im Bauteil tendieren - weniger lang als mit kringeiförmigen Wickelelementen - jedoch viel länger als mit bisherigen Granulaten.

Mit Mischformen 53 der Wickelelemente mit teils über, teils nebeneinanderliegenden Windungen wie auch durch Anzahl und Grösse der Windungen in den Wickelelementen können die gewünschten Eigenschaften im daraus hergestellten Bauteil (Faserlänge, Verteilung, Mischungsgrad) beeinflusst und optimiert werden.

Zur Erzielung möglichst grosser Faserlängen in einem Bauteil sind kringelförmige Wickelelemente 51 besonders geeignet.

Die Fig. 2a, b zeigen in zwei Ansichten ein Wickelelement 5 mit drei übereinander liegenden Windungen 6.1, 6.2, 6.3 mit den Lineardimensionen L = Länge, B = Breite, H = Höhe. Die Wickelelemente 5 weisen eine möglichst kompakte, runde Form auf, im weitesten Sinne angenähert an eine Kugel- oder quadratische Zylinderform. Damit können in relativ kleinem Volumen der Granulate relativ sehr grosse Faserlängen f erzeugt werden, welche ein Vielfaches der Faserlängen der bekannten Langfasergranulate betragen.

Fig. 3 zeigt ein Beispiel eines Wickelelements 5 mit nur 1 ½ übereinander liegenden Windungen 6.1, 6.2. Schon damit können Faserlängen f erreicht werden, welche das Dreifache der Lineardimension H betragen. Mit Vorteil können die Wickelelemente 5 je mindestens zwei Windungen 6, vorzugsweise drei bis acht Windungen aufweisen.

Fig. 4 zeigt ein Beispiel mit vier nebeneinander liegenden Windungen 6.1 - 6.4, = spiralförmiges Wickelelement 52.
Die Fig. 5 - 8 zeigen im Querschnitt auf einem Wickelkern 22 mit Wickelachse 23 weitere Beispiele von Wickelelementen 5 mit übereinander und nebeneinander liegenden Windungen 6. Fig. 5 zeigt ein Wickelelement 5.1 mit drei übereinander liegenden Windungen 6.1 - 6.3, Fig. 6 ein Wickelelement mit vier nebeneinander liegenden Windungen 6.1 - 6.4 und Fig. 7 ein Wickelelement mit vier verdichtet nebeneinander liegenden Windungen 6.1 - 6.4, d.h. jede folgende Windung liegt hier teilweise auf der vorangehenden Windung. Dadurch kann das Verhältnis von Höhe H zu Länge L = H/L vergrössert werden.

Fig. 8 zeigt ein Wickelelement 5 als kombinierte Form 53 mit drei nebeneinander liegenden und drei darüber liegenden Windungen: Die Windungen 6.4 - 6.6 werden über die Windungen 6.1 - 6.3 aufgewickelt. Die Herstellung dieser verschiedenen Arten von Wickelelementen wird zu den Fig. 11 - 14 weiter beschrieben.

Um eine möglichst kompakte runde Form zu erreichen, können die Wickelelemente 5 vorzugsweise ein Verhältnis von Maximum/Minimum der Lineardimensionen (L, B, H): max(L, B, H) / min(L, B, H) von höchstens 2 - 3 aufweisen. Diese Lineardimensionen L, B, H der Wickelelemente können für die meisten Anwendungen 5 - 20 mm betragen, wobei auch grössere Dimensionen möglich sind.

Die erfindungsgemässen Wickelelemente können prinzipiell Polymermaterial 2 aller Arten aufweisen. Mit besonderen Vorteilen können die Wickelelemente in thermoplastischen Herstellverfahren eingesetzt werden und entsprechend thermoplastisches Polymermaterial 2 bekannter Art aufweisen, z.B. mit Thermoplasten wie Polypropylen PP, Polyamide PA, technische und Hochleistungs-Polymere, neu z.B. PCTG = Polycyclohexandimethylenterephthalat usw. Je nach Anwendung können für die Wickelelemente 5 jedoch auch Duromere wie Epoxide EP, Polyester UP usw. als Polymermaterial 2 eingesetzt werden. Auch Elastomere wie Polyurethane, EPDM etc. können als Polymermaterial 2 eingesetzt werden.

Gute mechanische Eigenschaften können erreicht werden mit einem Faseranteil von 10 - 70%, vorzugsweise 20 - 60 Gewichts % und mit Faserlängen f von mehr als 25 mm der imprägnierten Endlosfaserstränge 3 in den Wickelelementen 5, wobei je nach Anwendung auch Faserlängen von 200 mm und mehr möglich sind. Als Verstärkungsfasern können wie bekannt Glas-, Kohle-, Aramidfasern usw. eingesetzt werden. Die Wickelelemente 5 können neben den imprägnierten Endlosfasersträngen 3 auch noch zusätzliches Polymermaterial 2 enthalten. Zu den Wickelelementen als Granulat (mit hohem Fasergehalt) kann auch reines Polymermaterial 2 zugemischt werden und so der Endfasergehalt in einem damit hergestellten Bauteil eingestellt werden.

Die Fig. 9 - 11 zeigen Anlagen und Verfahren zur kontinuierlichen Herstellung von erfindungsgemässen Wickelelementen 5 auf einem rotierenden Wickelkern 22.
Fig. 9 illustriert eine kontinuierliche Herstellung von Wicklungen 6a, welche nach der Verfestigung in einzelne Wickelelemente 5 zerschnitten werden.
Die Fig. 10 und 11 zeigen eine kontinuierliche Herstellung von Wickelelementen 5 mittels Zurückziehen und Vorschieben eines oszillierenden, rotierenden Wickelkerns 22 um eine Strecke x1.

Fig. 9a zeigt einen Teil einer Anlage, analog zu Fig. 10, zur Herstellung von Wickelelementen mittels Bildung von kontinuierlichen Wicklungen 6a mit einem hier im Uhrzeigersinn +21 rotierenden Wickelkern 22, auf den ein einlaufender imprägnierter Endlosfaserstrang 3 kontinuierlich aufgewickelt wird. Der auf einer Seite (hinten) einlaufende Endlosfaserstrang 3 wird anschliessend auf der anderen Seite (vorne) durch ein feststehendes Leitelement oder Leitblech 26 in Richtung +x um einen Weg xa vorgeschoben, um so den Platz (8) frei zu machen für den einlaufenden Endlosfaserstrang 3 und damit für die Bildung der nächsten Windung 6.5. Alle schon gefertigten Windungen 6.4, 6.3 ... bilden eine kontinuierliche Wicklung 6a, welche in +x-Richtung verschoben und dabei verfestigt wird.
Anschliessend wird die Wicklung 6a in definierten Abständen L zerschnitten mittels einer Trenn- oder Schneidvorrichtung 27 und damit werden die einzelnen Wickelelemente 5 mit Länge L erzeugt.

Fig. 9b zeigt ein Beispiel von Wickelelementen 5 in Mischform 53 mit teilweise übereinanderliegenden Windungen 6.1 - 6.4, welche mit einer Anlage nach Fig. 9a herstellbar sind, beispielsweise indem das Leitelement 26 den einlaufenden Endlosfaserstrang 3 bei gleicher Rotationsgeschwindigkeit der Wickelachse 23 nur um einen halben Betrag xa/2 vorschiebt (26'). Auch durch Verstellen von Leitelementen 24 können teilweise überlappende Windungen erzeugt werden.

Das allgemeine Verfahren zur kontinuierlichen Herstellung von Granulaten aus langfaserverstärktem Polymermaterial in Form von Wickelelementen 5 weist folgende Verfahrensschritte auf:
(41) abwickeln eines Rovings aus Endlos-Verstärkungsfasern 1 und imprägnieren mit geschmolzenem oder flüssigem Polymermaterial 2 zur Bildung eines imprägnierten Endlosfaserstrangs 3,
(42) aufwickeln des imprägnierten Endlosfaserstrangs 3 in übereinander und / oder nebeneinander liegenden Windungen 6 um eine Wickelachse 23 zur Bildung von Wicklungen 6a,
(43) und dabei verschieben der gebildeten Wicklungen in Axialrichtung +x,
(45) verfestigen der Wicklungen 6a während dem weiteren Verschieben in Axialrichtung +x,
(46) anschliessend durchschneiden der verfestigten Wicklungen 6a in definierten Abständen L und dadurch Bildung von einzelnen Wickelelementen 5.

Als Wickelachse 23 kann dabei ein rotierender Wickelkern 22 eingesetzt werden.

Eine besonders vorteilhafte Weiterbildung des Verfahrens weist ein zusätzliches periodisches Vorwärts- und Zurückbewegen des Wickelkerns 22 auf, wie in den Fig. 10 - 14 dargestellt wird:
Das Verfahren weist zusätzlich ein in Axialrichtung oszillierendes Bewegen (-x1, +x1) des Wickelkerns 22 auf mit folgenden Schritten:
   (42) aufwickeln des imprägnierten Endlosfaserstrangs 3 zur Bildung eines Wickelelements 5.1 in einer Wickelposition 8.1 auf dem Wickelkern, anschliessend
   (43) zurückziehen -x1 des Wickelkerns 22 und dadurch vorschieben der schon gebildeten Wickelelemente 5 auf dem Wickelkern und anschliessend
   (44) vorschieben +x1 des Wickelkerns und dadurch freigeben einer neuen Wickelposition 8.2 zur Erzeugung eines nächsten Wickelelements 5.2
   (45) verfestigen der Wickelelemente 5 beim weiteren Vorschieben (+x) auf dem Wickelkern
   (46) durchschneiden des imprägnierten Endlosfaserstrangs 3 und damit voneinander trennen der einzelnen Wickelelemente 5.

Das erfindungsgemässe Verfahren eignet sich im Besonderen zur Herstellung von thermoplastischem langfaserverstärktem Polymermaterial. Dabei werden im Verfahrensschritt (41) die Endlos-Verstärkungsfasern 1 mit aufgeheiztem, geschmolzenem thermoplastischem Polymermaterial 2 imprägniert und im Verfahrensschritt (45) werden die Wickelelemente 5 auf dem Wickelkern 22 abgekühlt und dadurch verfestigt. Dies wird ausgeführt in einer Anlage gemäss Fig. 10 und 11a.

Anstelle eines metallischen Wickelkerns 22 als Teil der Produktionsanlage kann in einer weiteren Verfahrensvariante auch ein Wickelkern 22a als Verbrauchsmaterial eingesetzt werden, der aus demselben thermoplastischen Polymermaterial 2 besteht wie die Wickelelemente 5. Dabei wird zuerst ein Stab aus unverstärktem oder vorzugsweise verstärktem Polymermaterial 2 gebildet bzw. vorgefertigt und anschliessend in kaltem, festem Zustand als rotierender Wickelkern 22a zum Aufwickeln des geschmolzenen imprägnierten Endlosfaserstrangs 3 verwendet und dann im Verfahrensschritt (46) mit dem imprägnierten Endlosfaserstrang zusammen durch die Trennvorrichtung 27 durchschnitten. Dann bildet ein Stück des polymeren Wickelkerns 22a zusammen mit den Windungen 6 ein Wickelelement 5.

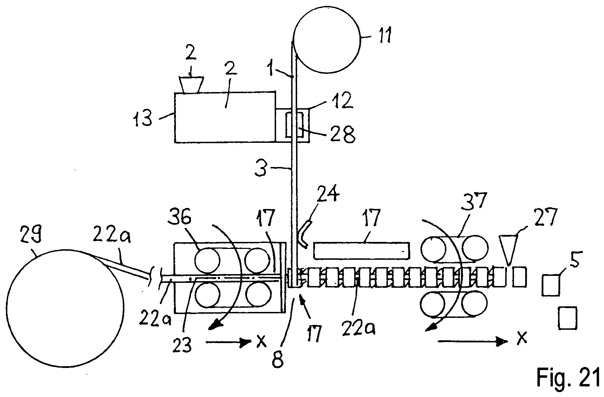

Fig. 21 zeigt eine Anlage zur Ausführung dieses Verfahrens. Der Wickelkern 22a wird vorzugsweise durch Imprägnieren eines Endlosfaser Rovings mit Polymermaterial 2 analog zu den imprägnierten Endlosfasersträngen 3 hergestellt. Damit, und durch entsprechende Formgebung soll der polymere Wickelkern 22a eine hohe Torsionssteifigkeit und guten Kontakt zum aufzuwickelnden geschmolzenen Endlosfaserstrang 3 aufweisen. Dazu wird der polymere Wickelkern 22a vor, nach und an der Aufwickelstelle 8 durch gezielte Kühlung möglichst kühl gehalten, so dass er im Inneren nicht weich wird. Der stabförmige Wickelkern 22a wird z.B. von einem Haspel 29 abgewickelt und mittels einer Zuführvorrichtung 36 an die Wickelstelle 8 vorgeschoben, hier vom imprägnierten Endlosfaserstrang 3 umwickelt, dann stark gekühlt 17 und anschliessend von einer Abzugsvorrichtung 37 in Axialrichtung x weiter vorgeschoben zu einer Trennvorrichtung 27. Die Zuführvorrichtung 36 und die Abzugsvorrichtung 37 rotieren beide den polymeren Wickelkern 22a um die Wickelachse 23 und schieben ihn in Axialrichtung x vor.

Bei der Verwendung von Duromeren oder Elastomeren als Polymermaterial 2 werden im Verfahrensschritt (41) kalt imprägnierte Endlosfaserstränge 3 gebildet und im Verfahrensschritt (45) werden die Wickelelemente 5 auf dem Wickelkern 22 durch Aufheizen bzw. Polymerisieren verfestigt.

Fig. 10 zeigt eine Anlage zur kontinuierlichen Herstellung von Granulaten aus langfaserverstärktem thermoplastischem Polymermaterial in Form von Wickelelementen 5. Die Anlage weist folgende Elemente auf:
- eine Abwickeleinheit 11 für einen Roving aus Endlos-Verstärkungsfasern 1, eine anschliessende Schmelze-Zuführung 13 von thermoplastischem Polymermaterial 2 und eine Schmelz- und Imprägniervorrichtung 12 zur Bildung eines geschmolzenen imprägnierten Endlosfaserstrangs 3,
- eine Wickelvorrichtung 18 mit einem Wickelkern 22 zum Aufwickeln, Abkühlen und Verfestigen des imprägnierten Endlosfaserstrangs 3 und zur Bildung von Wickelelementen 5 mit mehr als einer Windung 6 und mit übereinander und / oder nebeneinander liegenden Windungen 6,
- mit einem Rotationsmotor 20 zum Antrieb des Wickelkerns 22 mit einer Kühlvorrichtung 19 (z.B. eine Wasserkühlung)
- und mit einem Linearantrieb 30, mit welchem der Wickelkern 22 in Axialrichtung oszillierend bewegbar ist (-x1, +x1)
- zum Zurückziehen -x1 des Wickelkern 22 und dadurch Vorschieben der gebildeten Wickelelemente 5 auf dem Wickelkern
- und zum anschliessenden Vorschieben +x1 des Wickelkerns und dadurch Freigeben einer nächsten Wickelposition 8.2 zum Aufwickeln eines nächsten Wickelelements 5.2,
- mit einer Kühlvorrichtung 17 zum Abkühlen und Verfestigen der Wickelelemente 5 auf dem Wickelkern
- und mit einer Trennvorrichtung 27 zum Trennen der einzelnen verfestigten Wickelelemente 5 sowie mit einer Steuerung 35 der Anlage.

Die Anlage von Fig. 10 weist weiter auf: eine Heizung 14 in der Schmelz- und Imprägniervorrichtung 12, Luftkühlungen 17.1, 17.2, 17.3, ein Rückhalteblech 25 zum Zurückhalten der Wickelelemente 5 beim Zurückziehen des Wickelkerns 22, sowie Leitbleche 24, 24.2 für den einlaufenden imprägnierten Endlosfaserstrang 3. Dies wird weiter illustriert mit Fig. 11. Anstelle der Luftkühlung 17.3 könnte z.B. auch eine Wasser-Sprühkühlung zur raschen Verfestigung der Wickelelemente 5 auf dem Wickelkern eingesetzt werden. Die Trennvorrichtung 27 kann als Schneidvorrichtung mechanisch, mittels Wasserstrahl oder Laser ausgebildet sein.

Die Fig. 11a, b zeigen in einem Teil der Anlage nach Fig. 10 detaillierter eine Herstellung von Wickelelementen 5, hier mit drei übereinander liegenden (kringelförmigen 51) Windungen 6.1 - 6.3 auf einem Wickelkern mit Drehrichtung - 21 (im Gegenuhrzeigersinn). Fig. 11b zeigt den zeitlichen Verlauf s22 (t) der Bewegung des Wickelkerns 22 in Axialrichtung x: mit (43) zurückziehen um die Strecke - x1 (damit verschieben der gebildeten Wickelelemente 5.1, ...), (44) vorschieben um +x1 (damit freigeben der neuen Wickelposition 8.2), dann (42) aufwickeln der Windungen 6.1, 6.2, 6.3 = Wickelelement 5.2, dann wieder (43), (44) etc. Durch das Zurückziehen (43) des Wickelkerns 22 werden die gebildeten Wickelelemente 5 zusammengeschoben. Deshalb sind der Wickelbereich 8 und die Strecke x1 grösser als die resultierende Länge L der Wickelelemente 5. Fig. 11a zeigt miteinander verbundene, einstellbare Leitelemente oder Leitbleche 24, 24.2, welche zusammen in x-Richtung verschiebbar sind, so dass die Einlaufstelle des imprägnierten Endlosfaserstrangs 3 innerhalb der freigegebenen Wickelposition 8 zusätzlich verschiebbar ist (x2) zur Positionierung der Windungen 6i beim Aufwickeln. Dies wird am Beispiel von Fig. 14a, b illustriert. Mit Leitblechen 24 kann auch die Querschnittsform des einlaufenden Endlosfaserstrangs 3 beeinflusst werden, z.B. wie in Fig. 1 eine flache Querschnittsform 3, eine runde Querschnittsform 3.1 oder eine eher hohe Querschnittsform wie in Fig. 7 gebildet werden.

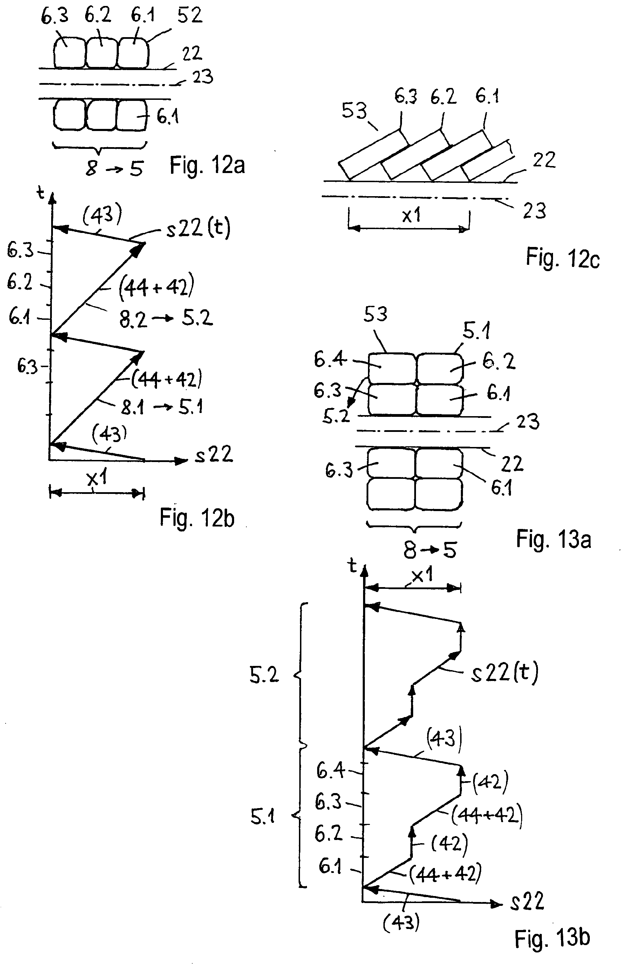

Die Fig. 12a, b illustrieren schematisch eine Herstellung von Wickelelementen mit nebeneinanderliegenden (spiralförmigen 52) Windungen 6.1 - 6.3 in einer Anlage nach Fig. 10. Die oszillierende Bewegung s22(t) des Wickelkerns 22 verläuft wie folgt: (43) zurückziehen um die Strecke x1 (und freigeben von 8.1), dann vorschieben (44) und gleichzeitig aufwickeln (42) der Windungen 6.1 - 6.3, dann wieder zurückziehen (43) etc.

Fig. 12c illustriert schematisch ein in einer Anlage nach Fig. 10, 11a hergestelltes Wickelelement 5 in Mischform 53, bei welchem durch Bewegen des Wickelkerns 22 gemäss Fig. 12b und durch geeignete Formgebung bzw. Führung des Endlosfaserstrangs 3 durch das Leitelement 24 die Windungen 6.1, 6.2, 6.3 teilweise übereinander aufgewickelt werden (in Fig. 12c schematisch gezeigt) und dann im Schritt 43 durch Zurückziehen des Wickelkerns 22 noch zusammengeschoben werden.

Die Fig. 13a, b zeigen eine Herstellung von Wickelelementen mit kombiniert übereinander und nebeneinander liegenden Windungen 6.1 - 6.4. Gemäss Verlauf von s22(t) erfolgt nach dem Zurückziehen (43) ein erstes Vorschieben (44) und Aufwickeln (42) der Windung 6.1, dann darauf das Aufwickeln der Windung 6.2, dann ein zweites Vorschieben (44) und Aufwickeln (42) der Windung 6.3 (neben der Windung 6.1), dann Aufwickeln der Windung 6.4 auf die Windung 6.3, dann wieder zurückziehen (43) etc.

Die Fig. 14a, b zeigen eine Herstellung von Wickelelementen (53) mit übereinander und nebeneinander liegenden Windungen 6.1 - 6.6. Hier kann die Position des einlaufenden imprägnierten Endlosfaserstrangs 3 innerhalb der freigelegten Wickelposition 8 zusätzlich verschoben werden mittels in x-Richtung verstellbaren Leitblechen 24, 24.2, wie dies in Fig. 11a gezeigt ist. Diese zeitliche Verschiebung s24(t) der Leitbleche ist in Fig. 14b dargestellt, zusätzlich zur axialen Bewegung s22(t) des Wickelkerns. s22(t) verläuft analog zur Bewegung des Wickelkerns im Beispiel von Fig. 11b. Während dem Aufwickeln (42) werden hier zusätzlich die Leitbleche 24, 24.2 gemäss s24(t) schrittweise zuerst in Richtung -x (für die Windungen 6.1, 6.2, 6.3), dann in Richtung +x (für die Windungen 6.4 - 6.6) verschoben. Der ganze Verschiebeweg s24(t) beträgt x2.

Die Fig. 15a - d zeigen Beispiele von Wickelkernen 22 im Querschnitt. Das Wickeln muss im plastischen (geschmolzenen) Zustand erfolgen. Zur Übertragung der erforderlichen Zugkraft zum Aufwickeln vom Wickelkern 22 auf den imprägnierten Endlosfaserstrang 3 ist ein hoher Reibwert in radialer Richtung erwünscht und zum Vorschieben der Wickelelemente ein möglichst geringer Reibwert in axialer Richtung. Dazu kann der Wickelkern 22 eine entsprechende Formgebung aufweisen, z.B. mit Nuten 32 gemäss Fig. 15a oder mit Rippen und Kanten 34 in Aufwickelrichtung 21 nach Fig. 15b und 15c. In Längsrichtung x sind die Wickelkerne zudem leicht konisch ausgebildet.

Die Oberfläche kann eine glatte, abriebfeste, harte Beschichtung aufweisen, z.B. aus Titancarbid, zur Verbesserung der Reibwerte und zur Minimierung von Verschleiss. Zwecks guter Kühlung bestehen die Wickelkerne vorzugsweise aus Metall mit guter Wärmeleitung, z.B. aus Messing. Eine besonders gute Kühlwirkung kann mit hohlen Wickelkernen gemäss Fig. 15d erreicht werden mit einem inneren Zufluss- und einem Abflusskanal 33 für Kühlwasser.
Die Fig. 16 - 18 zeigen Fotos von produzierten erfindungsgemässen Wickelelementen 5 aus Polypropylen PP mit 50% Glasfaserverstärkung in Form von 4-Fach-Kringeln mit 80 mm Faserlänge:
Fig. 16: mehrere kontinuierlich hergestellte Wickelelemente vor dem Trennen
Fig. 17: einzelne Wickelelemente als 4-Fach-Kringel
Fig. 18: Wickelelemente als Granulatmaterial

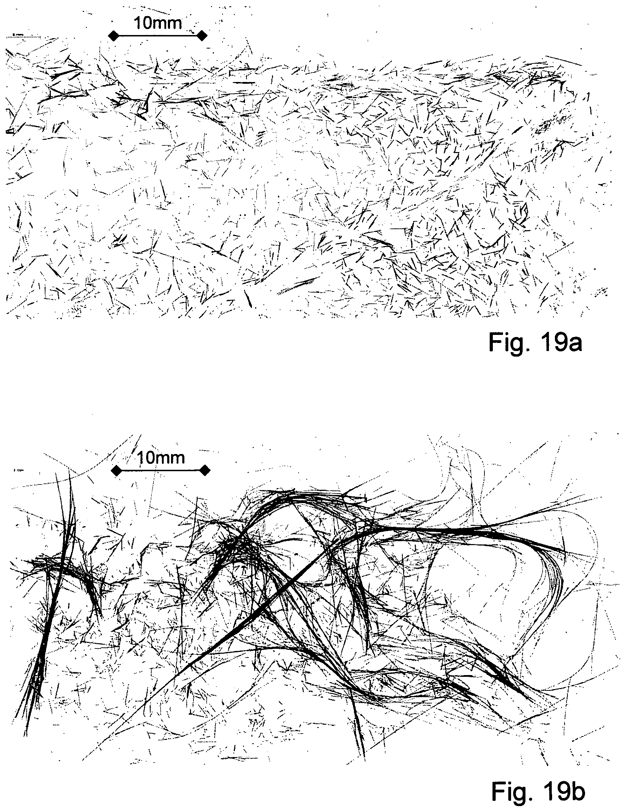

Die Fig. 19a, b illustrieren die resultierenden viel grösseren Faserlängen f in einem Spritzgussteil, welcher mit erfindungsgemässen Wickelelementen gefertigt ist im Vergleich zu bisherigem Granulatmaterial. Beide Proben sind mit einer kleinen Spritzgussanlage mit nur 35 mm Schneckendurchmesser hergestellt:
Fig. 19a mit 10 mm LFT-Stäbchengranulat mit 30% Faseranteil,
Fig. 19b mit Wickelelementen als 4-Fach-Kringel mit 80mm Faserlänge f und 12 % Faseranteil.
Die Figuren zeigen die grossen Unterschiede in den Faserlängen:
- mit bisherigem Material: Faserlängen f von 2 - 8 mm in Fig. 19a,
- mit Wickelelementen: grosser Anteil sehr langer Fasern mit Faserlängen f bis 80 mm in Fig. 19b.

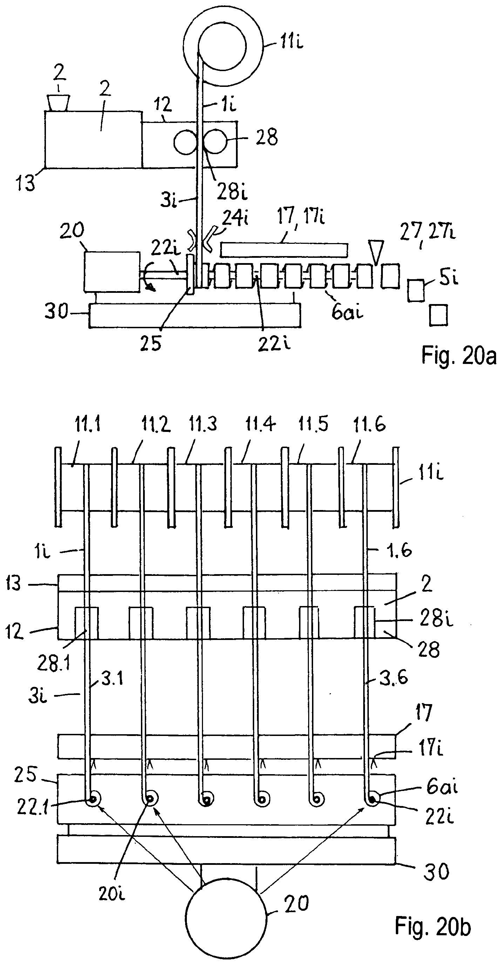

Die Fig. 20a, 20b zeigen eine Mehrfachanlage zur serienmässigen Herstellung der Wickelelemente 5 mit hoher Produktionsleistung und Produktivität bei reduziertem Platzbedarf und Energieverbrauch. Dabei werden gleichzeitig mehrere (z.B. 50) Endlosfaserstränge 3i separat zugeführt, abgewickelt, imprägniert (28i), aufgewickelt auf je einen rotierenden Wickelkern (22i), darauf vorgeschoben, verfestigt und zu einzelnen Wickelelementen 5i getrennt. Dies analog zur Anlage von Fig. 9a (ohne axiale Bewegung +x1, -x1 der Wickelkerne 22i).

Mit einer Mehrfachanlage gemäss Fig. 20a, b werden analog zur Anlage von Fig. 10 und 11a die Wickelkerne 22i zusätzlich zurückgezogen (-x1) in Schritt 43 und vorgeschoben (+x1) in Schritt 44. Dazu dient ein Linearantrieb 30 einer Vorschubeinheit, welcher alle rotierten Wickelkerne 22i zusammen in Axialrichtung bewegt.

Dieses Verfahren zur gleichzeitigen Herstellung von Wickelelementen 5 aus mehreren imprägnierten Endlosfasersträngen 3i läuft folgendermassen ab:
(41) - separat abwickeln von mehreren Endlosfaserrovings 1i von Abwickeleinheiten 11i und deren imprägnieren mit geschmolzenem Polymermaterial 2 in einem Imprägnierwerkzeug 28 mit mehreren Imprägnierstellen 28i,
(42) - aufwickeln der imprägnierten Endlosfaserstränge 3i je um einen rotierenden Wickelkern 22i,
(43) - zurückziehen -x1 und
(44) - vorschieben +x1 der mehreren Wickelkerne 22i mittels eines Linearantriebs 30,
(45) abkühlen und verfestigen der Wickelungen und trennen mittels einer Mehrfachtrennvorrichtung 27i in einzelne Wickelelemente 5i.

Damit können sehr viele Faserstränge 3i (z.B. 50) gleichzeitig rationell zu Wickelelementen 5i verarbeitet werden mit nur einem Extruder 13, einer Schmelzvorrichtung 12, einem Mehrfachimprägnierwerkzeug 28i, einem Linearantrieb 30, einer Mehrfachkühlvorrichtung 17i und einer Mehrfachschneidvorrichtung 27i.

Ein Bauteil und ein Verfahren zur Herstellung eines Bauteils aus faserverstärktem Polymermaterial kann in einem Formgebungsprozess mit erfindungsgemässen Wickelelementen 5 hergestellt werden. Solche Formgebungsprozesse bilden z.B. Spritzgiessen, Extrudieren, Fliesspressen usw. Dabei können die Wickelelemente in Form, Art und Grösse auf den Formgebungsprozess und die Formgebungsanlage gegenseitig abgestimmt und optimiert werden.

Wesentliche Vorteile, die mit den kontinuierlich hergestellten erfindungsgemässen Wickelelementen als Granulatmaterial mittels deren Aufbau und Formgebung erreicht werden, sind z.B.:
- kompakte runde Wickelelement-Granulate mit sehr grossen Faserlängen,
- gute Rieselfähigkeit und besseres Einzugsverhalten,
- massiv reduzierte Beanspruchung der Fasern im Feststoffförderbereich, dadurch wenig Faserbrüche, resultierend in viel grösseren Faserlängen und einem hohen Anteil an längeren Fasern im daraus gefertigten Bauteil, z.B. Spritzgussteil.

Damit werden auch wesentlich bessere mechanische Eigenschaften der gefertigten Bauteile, speziell Spritzgussteile, bezüglich Festigkeit, Steifigkeit und Schlagzähigkeit erreicht. Insbesondere können auch mit vorhandenen Formgebungsanlagen, z.B. mit kleineren Spritzgiessmaschinen mit kleinen Schneckendurchmessem
1. viel grössere Faserlängen der Wickelelemente verarbeitet werden und
2. damit viel grössere Faserlängen im Bauteil erreicht werden.

Im Rahmen dieser Beschreibung werden folgende Bezeichnungen verwendet:
- 1: Roving, Filament aus Endlos-Verstärkungsfasern, Endlosfaserroving
- 2: Matrixmaterial, Polymermaterial
- 3: imprägnierter Endlosfaserstrang
- 5: Wickelelement (Wickelgranulat)
- 6: Windung
- 6a: kontinuierliche Wicklung
- 7: Überlappung von 6
- 8: Wickelpositionen auf 22, Wickelbereich, Aufwickelstelle
- 10: Anlage
- 11: Rovingzuführung, Abwickeleinheit, Haspel
- 12: Schmelz- und Imprägniervorrichtung
- 13: Polymer, Matrixzuführung, Compounder, Extruder
- 14: Heizung von 12
- 17: Kühlvorrichtungen
- 17i: Mehrfachkühlvorrichtung mit mehreren Kühlstellen
- 17.1: Venturidüse nach 12
- 17.2: Luftkühlung an Einlauf von 3
- 17.3: Kühlung vor 27
- 18: Wickelvorrichtung
- 19: Kühlvorrichtung von 22
- 20: Rotationsmotor für 22
- 20i: Rotationsantriebe
- 21: Drehrichtung von 22
- 22: Wickelkern
- 22a: Wickelkern aus Polymermaterial
- 23: Wickelachse
- 24, 24.2: Leitbleche für 3, Leitelemente
- 25: Rückhalteblech
- 26: Leitelement für 3 bei 22
- 27: Trennvorrichtung, Schneidvorrichtung für 5
- 28: Imprägnierwerkzeug
- 28i: mehrere Imprägnierstellen
- 29: Haspel mit 22a
- 30: Linearantrieb in Axialrichtung x, Positionierantrieb für 22
- 32: Längsnuten
- 33: innere Wasserkühlung in 22
- 34: Kanten, Rippen
- 35: Steuerung für 11, 12, 17, 18, 20, 27, 30, 19, 24
- 36: Zuführvorrichtung
- 37: Abzugsvorrichtung für 22a

Verfahrensschritte 41 - 46:
- 41: abwickeln und imprägnieren von 3
- 42: aufwickeln von 3, 6
- 43: zurückziehen von 22, vorschieben von 6 auf 22
- 44: vorschieben von 22
- 45: verfestigen von 5 auf 22
- 46: abschneiden, trennen von 5
- 51: kringelförmige 5
- 52: spiralförmige 5
- 53: kombiniert: übereinander und nebeneinander liegende 6, Mischform
- x: Axialrichtung von 23
- x1: Verschiebeweg von 22
- x2: Verschiebeweg von 24, 24.2
- xa: Verschiebeweg durch 26
- t: Zeit
- s22: Weg von 22
- s24: Weg von 24, 24.2
- f: Faserlänge

Lineardimensionen von 5:
- L: Länge
- B: Breite
- H: Höhe

## Patentansprüche

1. Faserverstärktes Polymermaterial, insbesondere zum Verarbeiten im Spritzgiess- und Extrusionsverfahren, welches Granulate mit integrierter Langfaserverstärkung aufweist, wobei
- die Granulate aus Polymermaterial als Wickelelemente (5) ausgebildet sind, welche Endlosfaserstränge (3) aus mit Polymermaterial (2) imprägnierten Endlos-Verstärkungsfasern (1) aufweisen,
- welche Wickelelemente (5) mehr als eine Windung (6) der imprägnierten Endlosfaserstränge (3) enthalten,
- **dadurch gekennzeichnet, dass** die Windungen (6) in den Wickelelementen (5) in radialer Richtung zur Wickelachse (23) mindestens teilweise übereinander liegen (51, 53).

2. Polymermaterial nach Anspruch 1, **dadurch gekennzeichnet, dass** die Wickelelemente (5) mindestens zwei Windungen (6), vorzugsweise drei bis acht Windungen aufweisen.

3. Polymermaterial nach einem der vorangehenden Ansprüche, **dadurch gekennzeichnet, dass** das Verhältnis Maximum/Minimum der Lineardimensionen (L, B, H) der Wickelelemente (5): max(L, B, H)/min(L, B, H) höchstens 2 - 3 beträgt.

4. Polymermaterial nach einem der vorangehenden Ansprüche, **dadurch gekennzeichnet, dass** das Polymermaterial (2) Thermoplaste aufweist.

5. Polymermaterial nach einem der vorangehenden Ansprüche, **dadurch gekennzeichnet, dass** die imprägnierten Endlosfaserstränge (3) im Wickelelement (5) einen Faseranteil von 20 - 60 Gewichts % und Faserlängen (f) von mehr als 25 mm aufweisen.

6. Polymermaterial nach einem der vorangehenden Ansprüche, **dadurch gekennzeichnet, dass** die Wickelelemente (5) imprägnierte Endlosfaserstränge (3) und zusätzliches Polymermaterial (2) aufweisen.

7. Verfahren zur kontinuierlichen Herstellung von Granulaten aus langfaserverstärktem Polymermaterial in Form von Wickelelementen (5), **gekennzeichnet durch** folgende Verfahrensschritte:
- abwickeln eines Rovings aus Endlos-Verstärkungsfasern (1) und imprägnieren mit geschmolzenem oder flüssigem Polymermaterial (2) zur Bildung eines imprägnierten Endlosfaserstrangs (3),
- aufwickeln des imprägnierten Endlosfaserstrangs (3) in mindestens teilweise übereinander liegenden Windungen (6) auf einen rotierenden Wickelkern (22) als Wickelachse (23) und mittels Leitelementen (24, 26) zur Bildung von Wicklungen (6a),
- und dabei verschieben der gebildeten Wicklungen in Axialrichtung (+x),
- verfestigen der Wicklungen (6a) durch abkühlen oder aushärten während dem weiteren Verschieben in Axialrichtung (+x),
- anschliessend durchschneiden der verfestigten Wicklungen (6a) in definierten Abständen (L) und dadurch Bildung von einzelnen Wickelelementen (5).

8. Verfahren zur kontinuierlichen Herstellung von Granulaten aus langfaserverstärktem Polymermaterial in Form von Wickelelementen (5), **gekennzeichnet durch** einen rotierenden Wickelkern (22) als Wickelachse (23), welcher mittels eines Linearantriebs (30) in Axialrichtung oszillierend bewegt wird (-x1 + x1) zur Bildung von Wickelelementen mit übereinander liegenden Windungen (6) und durch folgende Verfahrensschritte:
- abwickeln eines Rovings aus Endlos-Verstärkungsfasern (1) und imprägnieren mit geschmolzenem oder flüssigem Polymermaterial (2) zur Bildung eines imprägnierten Endlosfaserstrangs (3),
- aufwickeln des imprägnierten Endlosfaserstrangs (3) zur Bildung eines Wickelelements (5.1) in einer Wickelposition (8.1) auf dem Wickelkern, anschliessend
- zurückziehen (-x1) des Wickelkerns (22) und dadurch vorschieben der schon gebildeten Wickelelemente (5) auf dem Wickelkern und anschliessend
- vorschieben (+x1) des Wickelkerns und dadurch freigeben einer neuen Wickelposition (8.2) zur Erzeugung eines nächsten Wickelelements (5.2),
- verfestigen der Wickelelemente (5) beim weiteren Vorschieben (+x) auf dem Wickelkern durch abkühlen oder aushärten,
- durchschneiden des imprägnierten Endlosfaserstrangs (3) und damit voneinander trennen der einzelnen Wickelelemente (5).

9. Verfahren nach Anspruch 8, **gekennzeichnet durch** zusätzliches Verschieben (+x2, -x2) der Einlaufstelle des imprägnierten Endlosfaserstrangs (3) innerhalb der freigegebenen Wickelposition (8) mittels in x-Richtung verstellbaren Leitblechen (24, 24.2).

10. Verfahren nach Anspruch 7 oder 8 mit Verwendung von thermoplastischem Polymermaterial (2), **gekennzeichnet durch** imprägnieren der Endlos-Verstärkungsfasern (1) mit aufgeheiztem, geschmolzenem Polymermaterial (2), abkühlen und dadurch verfestigen der Wickelelemente (5) auf dem Wickelkern (22).

11. Verfahren nach Anspruch 10 zur gleichzeitigen Herstellung von Wickelelementen (5) aus mehreren imprägnierten Endlosfasersträngen (3i), **gekennzeichnet durch**
- separat abwickeln von mehreren Endlosfaser-Rovings (1i) von Abwickeleinheiten (11i) und deren Imprägnieren mit geschmolzenem Polymermaterial (2) in einem Mehrfach-Imprägnierwerkzeug (28i)
- aufwickeln der imprägnierten Endlosfaserstränge (3i) je um einen rotierenden Wickelkern (22i)
- zurückziehen (-x1) und
- vorschieben (+x1) der mehreren Wickelkerne (22i) mittels eines Linearantriebs (30).

12. Verfahren nach Anspruch 7 oder 8, **dadurch gekennzeichnet, dass** ein Stab aus faserverstärktem Polymermaterial (2) vorgefertigt und als Wickelkern (22a) eingesetzt wird und zusammen mit den Wickelelementen (5) mittels einer Trennvorrichtung (27) in einzelne Wickelelemente (5) getrennt wird, wobei der Wickelkern (22a) mittels einer Zuführvorrichtung (36) und einer Abzugsvorrichtung (37) in Axialrichtung (x) vorgeschoben und um die Wickelachse (23) rotiert wird.

13. Anlage zur kontinuierlichen Herstellung von Granulaten aus langfaserverstärktem thermoplastischem Polymermaterial in Form von Wickelelementen (5), aufweisend
- eine Abwickeleinheit (11) für einen Roving aus Endlos-Verstärkungsfasern (1), eine anschliessende Schmelze-Zuführung (13) von thermoplastischem Polymermaterial (2) und eine Schmelz- und Imprägniervorrichtung (12) zur Bildung eines geschmolzenen imprägnierten Endlosfaserstrangs (3)
- eine Wickelvorrichtung (18) mit einem Wickelkern (22) zum Aufwickeln, Abkühlen und Verfestigen des imprägnierten Endlosfaserstrangs (3) und zur Bildung von Wickelelementen (5) mit mehr als einer Windung (6) und mit übereinander liegenden Windungen (6),
- mit einem Rotationsmotor (20) zum Antrieb des Wickelkerns (22) mit einer Kühlvorrichtung (19)
- mit einer Kühlvorrichtung (17) zum Abkühlen und Verfestigen der Wickelelemente (5) auf dem Wickelkern
- und mit einer Trennvorrichtung (27) zum Trennen der einzelnen verfestigten Wickelelemente (5) sowie mit einer Steuerung (35) der Anlage, **gekennzeichnet durch**
- einen Linearantrieb (30), mit welchem der Wickelkern (22) in Axialrichtung oszillierend bewegbar ist (-x1, +x1),
- zum Zurückziehen (-x1) des Wickelkerns (22) und dadurch Vorschieben der gebildeten Wickelelemente (5) auf den Wickelkern
- und zum anschliessenden Vorschieben (+x1) des Wickelkerns und dadurch Freigeben einer nächsten Wickelposition (8.2) zum Aufwickeln eines nächsten Wickelelements (5.2).

14. Anlage nach Anspruch 13, **dadurch gekennzeichnet, dass** der Wickelkern (22) metallisch, leicht konisch (31) und mit Längsnuten (32) oder Kanten (34) ausgebildet ist und / oder dass er eine innere Wasserkühlung (33) aufweist.

15. Verfahren zur Herstellung eines Bauteils aus faserverstärktem Polymermaterial (2), **dadurch gekennzeichnet, dass** das Bauteil in einem Formgebungsprozess mit Wickelelementen (5) nach einem der Ansprüche 1- 6 hergestellt ist.

## Claims

1. A fiber-reinforced polymer material, in particular for processing in the injection moulding method and extrusion method, comprising granular materials with integrated long-fiber reinforcement, wherein
- the granular materials are formed from polymer material as wound elements (5) which comprise continuous fiber strands (3) of continuous reinforcement fibers (1) impregnated with polymer material (2),
- said wound elements (5) containing more than one turn (6) of the impregnated continuous fiber strands (3),
- **characterised in that** the turns (6) in the wound elements (5) in radial direction to the winding axis (23) at least partly are lying over one another (51, 53).

2. A polymer material according to claim 1, **characterised in that** the wound elements (5) comprise at least two turns (6), preferably three to eight turns.

3. A polymer material according to one of the preceding claims, **characterised in that** the ratio maximum/minimum of the linear dimensions (L, B, H) of the wound elements (5): max (L, B, H)/min (L, B, H) is at the most 2 - 3.

4. A polymer material according to one of the preceding claims, **characterised in that** the polymer material (2) comprises thermoplasts.

5. A polymer material according to one of the preceding claims, **characterised in that** the impregnated continuous fiber strands (3) in the wound element (5) have a fiber share of 20 - 60% by weight and fiber lengths (f) of more than 25 mm.

6. A polymer material according to one of the preceding claims, **characterised in that** the wound elements (5) comprise impregnated continuous fiber strands (3) and additional polymer material (2).

7. A method for the continuous manufacture of granular materials of long-fiber-reinforced polymer material in the form of wound elements (5), **characterised by** the following method steps:
- winding off a roving of continuous reinforcement fibers (1) and impregnating with molten or liquid polymer material (2) for forming an impregnated continuous fiber strand (3),
- about a rotating winding core (22) as a winding axis (23) and by means of guiding elements (24, 26) winding the impregnated continuous fiber strand (3) into turns (6) lying at least partly over one another for forming windings (6a),
- and thereby displacing the formed windings in the axial direction (+x),
- solidifying the windings (6a) by means of cooling or hardening during the further displacement in the axial direction (+x),
- subsequent cutting through the solidified windings (6a) at defined distances (L), and by way of this, the formation of individual wound elements (5).

8. A method for the continuous manufacture of granular materials of long-fiber-reinforced polymer material in the form of wound elements (5), **characterised by** a rotating winding core (22) as a winding axis (23) which is moved in axial direction (-x1, +x1) in an oscillating manner by means of a linear drive (30) for forming wound elements with turns (6) lying over one another and by the following method steps:
- winding off a roving of continuous reinforcement fibers (1) and impregnating with molten or liquid polymer material (2) for forming an impregnated continuous fiber strand (3),
- winding the impregnated continuous fiber strand (3) for forming a wound element (5.1) in a winding position (8.1) on the winding core, subsequently
- retracting (-x1) the winding core (22) and by way of this, advancing the already formed wound elements (5) on the winding core and subsequently
- advancing (+x1) the winding core (22) and by way of this releasing a new winding position (8.2) for producing a next wound element (5.2)
- solidifying the wound elements (5) with a further advance (+x) on the winding core by means of cooling or hardening,
- cutting through the impregnated continuous fiber strand (3) and thus separation of the individual wound elements (5) from one another.

9. A method according to claim 8, **characterised by** an additional displacement (+x2, -x2) of the run-in location of the impregnated continuous fiber strand (3) within the released winding position (8) by way of guide plates (24, 24.2) which can be adjusted in the x-direction.

10. A method according to claim 7 or 8 with the use of thermoplastic polymer material (2) **characterised by**
- impregnating the continuous reinforcement fibers (1) with heated, molten polymer material (2),
- cooling and thus solidifying the wound elements (5) on the winding core (22).

11. A method according to claim 10 for the simultaneous manufacture of wound elements (5) of several impregnated continuous fiber strands (3i), **characterised by**
- separately winding off several continuous fiber rovings (1i) from winding-off units (11) and their impregnation with molten polymer material (2) in a multiple impregnation tool (28i)
- winding the impregnated continuous fiber strands (3i) in each case around a rotating winding core (22i)
- retracting (-x1) and
- advancing (+x1) the several winding cores (22i) by way of a linear drive (30).

12. A method according to claim 7 or 8, **characterised in that** that a rod of fiber-reinforced polymer material (2) is premanufactured and is applied as a winding core (22a) and together with the wound elements (5) is separated into individual wound elements (5) by way of a separating device (27), wherein the winding core (22a) is advanced in the axial direction (x) by way of a feed device (36) and a withdrawal device (37) and is rotated about the winding axis (23).

13. An installation for the continuous manufacture of granular materials of long-fiber reinforced thermoplastic polymer material in the form of wound elements (5), comprising
- a winding-off unit (11) for a roving of continuous reinforcement fibers (1), a subsequent melt feed (13) of thermoplastic polymer material (2) and a melt and impregnation device (12) for forming a molten, impregnated continuous fiber strand (3)
- a winding device (18) with a winding core (22) for winding, cooling and solidifying the impregnated continuous fiber strand (3) and for forming wound elements (5) with more than one turn (6) and with turns (6) lying over one another,
- with a rotation motor (20) for the drive of the winding core (22) with a cooling device (19)
- with a cooling device (17) for cooling and solidifying the wound elements (5) on the winding core
- and with a separating device (27) for separating the individual solidified wound elements (5) as well as with a control (35) of the installation, **characterised by**
- a linear drive (30), with which the winding core (22) can be moved in the axial direction in an oscillating manner (-x1, +x1)
- for retracting (-x1) the winding core (22) and by way of this for advancing the formed wound elements (5) on the winding core
- and for the subsequent advance (+x1) of the winding core, and by way of this for the release of a next winding position (8.2) for winding a next wound element (5.2),

14. An installation according to claim 13, **characterised in that** the winding core (22) is designed metallically, slightly conically (31) and with longitudinal grooves (32) or with edges (34) and/or that it has an inner water cooling (33).

15. A method for manufacturing a component of fiber-reinforced polymer material (2), **characterised in that** the component is manufactured in a shaping process with wound elements (5), according to one of the claims 1 - 6.

## Revendications

1. Matériau polymère renforcé par des fibres, en particulier destiné au traitement dans un procédé de moulage par injection et d'extrusion, lequel matériau polymère présente des granulés avec un renforcement intégré par des fibres longues, dans lequel :
- les granulés sont conçus à partir d'un matériau polymère qui se présente sous la forme d'éléments de bobinage (5), lesquels présentent des brins continus de fibres (3) qui sont constitués de fibres de renforcement (1) continues et imprégnées avec le matériau polymère (2) ;
- lesquels éléments de bobinage (5) comprennent plus d'une spire (6) des brins continus de fibres (3) imprégnés ;
- **caractérisé en ce que**
les spires (6) sont mises en place les unes sur les autres (51, 53), tout au moins en partie, dans les éléments de bobinage (5), dans la direction radiale par rapport à l'axe de bobinage (23).

2. Matériau polymère selon la revendication 1, **caractérisé en ce que** les éléments de bobinage (5) présentent au moins deux spires (6), de préférence entre trois et huit spires.

3. Matériau polymère selon l'une des revendications ci-dessus, **caractérisé en ce que** le ratio entre le maximum et le minimum des dimensions linéaires (L, B, H) des éléments de bobinage (5), c'est à dire max (L, B, H) / min (L, B, H), s'élève au plus à 2 ou 3.

4. Matériau polymère selon l'une des revendications ci-dessus, **caractérisé en ce que** le matériau polymère (2) présente des matières thermoplastiques.

5. Matériau polymère selon l'une des revendications ci-dessus, **caractérisé en ce que** les brins continus de fibres (3) imprégnés présentent, dans l'élément de bobinage (5), une proportion de fibres comprise entre 20 et 60 % en poids et des longueurs de fibres (f) de plus de 25 mm.

6. Matériau polymère selon l'une des revendications ci-dessus, **caractérisé en ce que** les éléments de bobinage (5) présentent des brins continus de fibres (3) imprégnés et ainsi qu'un matériau polymère (2) supplémentaire.

7. Procédé destiné à la fabrication en continu de granulés constitués d'un matériau polymère renforcé par des fibres longues et qui se présente sous la forme d'éléments de bobinage (5), **caractérisé par** les phases de procédé suivante :
- le déroulement d'un stratifil (roving) constitué de fibres continues de renforcement (1) et l'imprégnation avec un matériau polymère (2) fondu ou liquide en vue de la formation d'un brin continu de fibres (3) imprégné ;
- l'enroulement du brin continu de fibres (3) imprégné en des spires (6), lesquelles se trouvent, tout au moins en partie, mises en place les unes sur les autres, sur un noyau de bobinage (22) en rotation qui se présente sous la forme d'un axe de bobinage (23) et au moyen d'éléments de guidage (24, 26) en vue de la formation de bobinages (6a) ; et
- le décalage, pendant cette phase, des bobinages ainsi formés dans la direction axiale (+x) ;
- la solidification des bobinages (6a) au moyen d'un processus de refroidissement ou de durcissement pendant le nouveau décalage dans la direction axiale (+x) ; et enfin
- la découpe des bobinages (6a) solidifiés dans des intervalles définis dans l'espace (L) et la formation, par conséquent, d'éléments de bobinage (5) distincts.

8. Procédé destiné à la fabrication en continu de granulés constitués d'un matériau polymère renforcé par des fibres longues qui se présentent sous la forme d'éléments de bobinage (5),
**caractérisé par** un noyau de bobinage (22) en rotation qui se présente sous la forme d'un axe de bobinage (23), lequel est déplacé dans la direction axiale (-x1 +x1) par l'intermédiaire d'oscillations au moyen d'un entraînement linéaire (30) en vue de la formation d'éléments de bobinage comprenant des spires (6) qui sont mises en place les unes sur les autres ; et
**caractérisé par** les phases de procédé suivantes :
- le déroulement d'un stratifil constitué de fibres continues de renforcement (1) et l'imprégnation avec un matériau polymère (2) fondu ou liquide en vue de la formation d'un brin continu de fibres (3) imprégné ;
- l'enroulement du brin continu de fibres (3) imprégné en vue de la formation d'un élément de bobinage (5.1) dans une position de bobinage (8.1) sur le noyau de bobinage (22) ; puis
- le retrait (-x1) du noyau de bobinage (22), provoquant par là même l'avance des éléments de bobinage déjà formés (5) sur le noyau de bobinage ; et ensuite
- l'avance (+x1) du noyau de bobinage, provoquant par là même la libération d'une nouvelle position de bobinage (8.2) en vue de la génération d'un prochain élément de bobinage (5.2) ;
- la solidification des éléments de bobinage (5) par la nouvelle avance (+x) sur le noyau de bobinage au moyen d'un processus de refroidissement ou de durcissement ;
- la découpe du brin continu de fibres (3) imprégné et, par conséquent, la séparation les uns des autres des éléments de bobinage (5) distincts.

9. Procédé selon la revendication 8, **caractérisé par** un décalage (+x2, -x2) supplémentaire du point d'entrée du brin continu de fibres (3) imprégné à l'intérieur de la position de bobinage (8) libérée, au moyen de tôles de guidage (24, 24.2) qui peuvent être ajustées dans la direction des x.

10. Procédé selon la revendication 7 ou 8 avec l'emploi d'un matériau polymère (2) thermoplastique, **caractérisé par** l'imprégnation des fibres continues de renforcement (1) au moyen d'un matériau polymère (2) chauffé et fondu, du refroidissement et, par conséquent, de la solidification des éléments de bobinage (5) sur le noyau de bobinage (22).

11. Procédé selon la revendication 10 destiné à la fabrication simultanée d'éléments de bobinage (5) constitués de plusieurs brins continus de fibres (3i) imprégnées,
**caractérisé par**
- le déroulement réalisé de manière séparée de plusieurs stratifils continus de fibres (1i) d'unités de déroulement (11i) et leur imprégnation avec un matériau polymère (2) fondu dans un outil d'imprégnation multiple (28i) ;
- l'enroulement de chacun des brins continus de fibres (3i) imprégnées autour d'un noyau de bobinage (22i) en rotation ;
- le retrait (-x1) ; et
- l'avance (+x1) des plusieurs noyaux de bobinage (22i) au moyen d'un entraînement linéaire (30).

12. Procédé selon la revendication 7 ou 8, **caractérisé en ce qu'**une tige constituée d'un matériau polymère (2) renforcé par des fibres est préfabriquée et utilisée sous la forme d'un noyau de bobinage (22a) et, ensemble avec les éléments de bobinage (5), est séparée en des éléments de bobinage (5) distincts au moyen d'un dispositif de séparation (27), dans lequel le noyau de bobinage (22a) est avancé dans la direction axiale (x) et mis en rotation autour de l'axe de bobinage (23) au moyen d'un dispositif d'alimentation (36) et d'un dispositif de tirage (37).

13. Installation destinée à la fabrication en continu de granulés constitués d'un matériau polymère thermoplastique, renforcé par des fibres longues, lequel se présente sous la forme d'éléments de bobinage (5), laquelle installation comprend :
- une unité de déroulement (11) pour un stratifil constitué de fibres continues de renforcement (1), une alimentation (13) consécutive de la masse en fusion constituée du matériau polymère (2) thermoplastique, ainsi qu'un dispositif de fonte et d'imprégnation (12) en vue de la formation d'un brin continu de fibres (3) fondu et imprégné ;
- un dispositif de bobinage (18) avec un noyau de bobinage (22) en vue de l'enroulement, du refroidissement et de la solidification du brin continu de fibres (3) imprégné et en vue de la formation d'éléments de bobinage (5) avec plus d'une spire (6) et avec des spires (6) qui sont mises en place les unes sur les autres ;
- avec un moteur de rotation (20) destiné à l'entraînement du noyau de bobinage (22) avec un dispositif de refroidissement (19) ;
- avec un dispositif de refroidissement (17) en vue du refroidissement et de la solidification des éléments de bobinage (5) sur le noyau de bobinage ; et
- avec un dispositif de séparation (27) destiné à la séparation des éléments de bobinage (5) distincts, solidifiés, ainsi qu'avec une commande (35) de l'installation ;
**caractérisée par**
- un entraînement linéaire (30), au moyen duquel le noyau de bobinage (22) peut être déplacé dans la direction axiale (-x1, +x1) par l'intermédiaire d'oscillations ;
- en vue du retrait (-x1) du noyau de bobinage (22) et, par conséquent, de l'avance des éléments de bobinage (5) ainsi formés sur le noyau de bobinage ; et
- en vue de l'avance (+x1) consécutive du noyau de bobinage et, par conséquent, de la libération d'une position de bobinage (8.2) suivante en vue de l'enroulement d'un élément de bobinage (5.2) suivant.

14. Installation selon la revendication 13, **caractérisé en ce que** le noyau de bobinage (22) est conçu de manière métallique, légèrement conique (31) et avec des rainures longitudinales (32) ou des arêtes (34) et/ou **caractérisé en ce que** le noyau de bobinage présente un système interne de refroidissement de l'eau (33).

15. Procédé destiné à la fabrication d'un composant constitué à partir d'un matériau polymère (2) renforcé par des fibres, **caractérisé en ce que** ledit composant est fabriqué dans un processus de mise en forme avec des éléments de bobinage (5) selon l'une des revendications 1-6.
